# FASCICULE DE BREVET EUROPEEN

(11) **EP 4 584 142 B1**
(45) Date de publication et mention de la délivrance du brevet: **27.05.2026**
(21) Numéro de dépôt: 23764683.1
(22) Date de dépôt: 17.07.2023
(51) Int. Cl.: B60W 30/14, B60W 50/02, B60W 50/029, B60W 50/04, B60W 50/035

(54) **PROCÉDÉ ET DISPOSITIF DE DÉSACTIVATION D'UNE FONCTION LIMITATEUR DE VITESSE VÉHICULE AUTONOME**
VERFAHREN UND VORRICHTUNG ZUR DEAKTIVIERUNG EINER GESCHWINDIGKEITSBEGRENZUNGSFUNKTION FÜR EIN AUTONOMES FAHRZEUG
METHOD AND DEVICE FOR DEACTIVATING A SPEED LIMITER FUNCTION FOR AN AUTONOMOUS VEHICLE

(30) Priorité: 09.09.2022 FR 2209026
(43) Date de publication de la demande: 16.07.2025
(73) Titulaire: Stellantis Auto SAS, 78300 Poissy (FR)
(72) Inventeur: BALENGHIEN, Olivier, 93390 CLICHY SOUS BOIS (FR)
(74) Mandataire: ESIP
(86) Numéro de dépôt international: PCT/FR2023/051093
(87) Numéro de publication internationale: WO 2024/052605

(56) Documents cités:
- EP-A1- 3 146 823
- EP-A1- 3 819 205

## Description

La présente invention revendique la priorité de la demande française 2209026 déposée le 09.09.2022.

### Domaine technique de l'invention

L'invention est dans le domaine des systèmes d'aide à la conduite de véhicule autonome. En particulier, l'invention concerne un procédé et dispositif de désactivation d'une fonction limitateur de vitesse véhicule, dite fonction LVV, d'un véhicule autonome.

### Etat de la technique

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Les procédés aptes à assister la conduite du véhicule sont aussi nommés ADAS (de l'acronyme anglais « Advanced Driver Assistance Systems »), systèmes ADAS ou systèmes d'aide à la conduite. Parmi ces systèmes est connue la fonction limitateur de vitesse véhicule, dite fonction LVV, ou dite aussi limiteur de vitesse.

Une fonction LVV est un système empêchant le véhicule de dépasser une vitesse programmée par le conducteur. Cette vitesse programmée est également dite vitesse limite consigne, vitesse limite ou vitesse consigne. Une fois la vitesse limite est atteinte, un appui supplémentaire sur une pédale d'accélérateur du véhicule est sans effet. Cependant, en appuyant fortement sur la pédale d'accélérateur, au-delà d'un point de résistance ou d'une position prédéterminée, il est possible de dépasser momentanément la vitesse programmée. Pour revenir à la vitesse programmée, il suffit alors de relâcher la pédale d'accélérateur jusqu'à ce que la vitesse programmée soit de nouveau atteinte.

On connait par le document EP3819205, un dispositif de régulation de vitesse, un système de navigation automatique et un procédé de régulation de vitesse.

Une interface homme machine, IHM, est disponible à proximité d'un conducteur du véhicule. A l'aide de cette IHM, le conducteur peut activer, mettre en pose ou arrêter la fonction LVV. Le conducteur peut également régler la vitesse limite consigne. Par appuis courts, moins d'un temps prédéterminé, successifs sur une touche « + » ou « - » par exemple, la valeur de la vitesse limite consigne est modifié par pas de +/- 1 unité (km/h, miles/h, ...). Par un appui continu, appui supérieur à un autre temps prédéterminé, sur une touche « + » ou « - » par exemple, la valeur de la vitesse limite consigne est modifié par pas de +/- 5 unités (km/h, miles/h, ...) par exemple.

Lorsque la fonction LVV est activée, lorsqu'une vitesse limite consigne est programmé, il est possible que la vitesse du véhicule dépasse temporairement la vitesse limite consigne. Ce dépassement peut se produire lors d'une volonté du conducteur par un appui plus fort ou plus profond de la pédale d'accélération, ou lors de certaines situations de vie comme, par exemple, la route est en pente descendante, bourrasque de vent, ... Lors d'un dépassement de vitesse véhicule temporaire de la vitesse limite consigne, le limitateur de vitesse se neutralise momentanément, l'IHM prévient le conducteur comme par exemple un clignotement, une alerte sonore, ... Classiquement l'alerte sonore n'est émise que si le dépassement n'est pas dû suite à la volonté du conducteur (enfoncement de la pédale d'accélérateur).

De nos jours, les véhicules comprennent de plus en plus de fonction d'aides à la conduite. D'autre part, pour des raisons de coûts par exemple, une même caisse ou un même type de véhicule doit être compatible avec différents types de motorisation (chaîne de traction thermique, chaîne de traction électrique) pour une même liaison au sol (direction, suspension, freinage, ...). Ainsi, les fonctions d'aides à la conduite sont modulaires et le code logiciel est principalement exécuté par un calculateur dédié, dit calculateur ADAS ou calculateur LVV. Ce calculateur peut être aussi un calculateur de la liaison au sol comme un calculateur ABS/ESP (anti-patinage ou blocage des roues). La fonction LVV modifiant la vitesse du véhicule, le calculateur LVV doit communiquer avec un calculateur du Groupe motopropulseur, GMP, ou de la chaine de traction, CT afin que ce calculateur du GMP ou de la CT intervient sur le moteur en modifiant le besoin en accélération du véhicule. Cette communication se fait par exemple par un message sur une messagerie CAN. Le contenu d'un message peut être une nouvelle valeur de vitesse limite consigne choisie par le conducteur. Un message est envoyé à la suite d'un appui sur une touche « + » ou « - » par exemple.

Un des calculateurs du GMP ou de la CT comporte une partie du module logiciel du limitateur de vitesse véhicule. Ce une partie du module logiciel interprète des messages transmis par le calculateur LVV afin d'activer, de mettre en pause, d'arrêter le limitateur de vitesse, de limiter la vitesse véhicule à la vitesse limite consigne en modifiant, par exemple, la demande en accélération ou couple moteur. Ce une partie du module logiciel permet également d'alerter le conducteur en cas de dépassement de la vitesse limite consigne.

La multitude de fonctions, la multitude de module, et le besoin d'être compatible quel que soit le type de chaîne de traction ou le type de liaisons au sol entrainent un réseau électrique et électronique de plus en plus complexe. Plusieurs moyens sont disponibles en même temps pour faire communiquer des calculateurs entre eux : multiplication de connexions filaires entrainant plusieurs voies de communication possibles pour transférer une information d'un calculateur à un autre, informations, transmises par un réseau CAN par exemple ou autre, de plus en plus nombreuses, ... Nous constatons que des pertes d'informations sont possibles et peuvent provenir d'un calculateur (par exemple à cause d'une surcharge de calcul, d'un dysfonctionnement d'un algorithme, d'une incapacité de traitement par l'interface d'entrée et/ou de sortie, ...), des connectiques et/ou de l'interface filaire (faux contacts, court-circuit, circuit ouvert, perturbation électromagnétique, collision de trames CAN, anomalie sur la messagerie CAN transmise, ...), d'une non synchronisation entre calculateurs (horloge non synchronisé, fréquence de calculs différents, fréquence d'acquisition de donnés des capteurs non identiques à la fréquence des puces électronique faisant interface d'entrée et de sortie d'un calculateur, délais nécessaire à la transmission électronique des informations entre calculateurs, parcours différents d'une messagerie électronique possibles, ...).

Ainsi, dans des cas rares, il est possible que l'information vitesse limite consigne soit mal ou non transmises d'un calculateur LVV vers un calculateur GMP ou CT. Le module logiciel peut alors comprendre que la vitesse limite consigne est beaucoup plus haute ou plus basse que la vitesse limite voulue par le conducteur. Il existe même des cas où la vitesse limite consigne est comprise comme égale à 0 km/h lors d'une absence de messagerie CAN ou lors une valeur erronée dans la messagerie. Dans le cas où la vitesse limite consigne est comprise comme inférieure à la vitesse limite programmée par le conducteur, l'alerte de dépassement de la vitesse limite consigne est émise sans arrêt ou très longtemps sans que le conducteur comprenne pourquoi. Dans le cas où la vitesse limite consigne est comprise comme supérieure à la vitesse limite programmée par le conducteur, le véhicule peut brutalement accélérer afin d'atteindre la vitesse limite consigne comprise.

### Résumé de l'invention

Un objet de la présente invention est de remédier au problème précité, en particulier d'améliorer la sécurité de fonctionnement d'une fonction limitateur de vitesse véhicule implanté dans une architecture électrique électronique complexe. On évite ainsi des accélérations ou décélérations intempestives dudit véhicule et/ou des alertes intempestives dans ledit véhicule. D'autre part, l'invention permet d'aider à identifier, localiser et réparer la source du problème en après-vente.

A cet effet, un premier aspect de l'invention concerne un procédé de désactivation d'une fonction limitateur de vitesse véhicule, dite fonction LVV, d'un véhicule autonome, ledit véhicule comprenant un premier calculateur, dit calculateur LVV, communiquant avec un second calculateur, dit superviseur, ledit procédé comportant les étapes de :
- réception par ledit superviseur d'une information de demande d'activation de ladite fonction LVV, dite information d'activation, ladite information d'activation étant transmise par ledit calculateur LVV ;
- réception par ledit superviseur d'une première information de vitesse limite consigne, dite ancienne consigne, ladite ancienne consigne étant transmise par ledit calculateur LVV ;
- réception par ledit superviseur d'une deuxième information de vitesse limite consigne, dite nouvelle consigne, ladite nouvelle consigne étant transmise par ledit calculateur LVV, la nouvelle consigne étant transmise après la transmission de l'ancienne consigne ;
- détermination d'un écart entre ladite nouvelle consigne et ladite ancienne consigne ;
- si ledit écart est supérieur à un premier seuil prédéfini, dit seuil haut, ou si ledit écart est inférieur à un deuxième seuil prédéfini, dit seuil bas, ledit seuil haut étant positif, ledit seuil bas étant négatif, création, par le superviseur, d'un signal de désactivation de ladite fonction LVV, le signal de désactivation étant utilisé par un calculateur dudit véhicule pour désactiver ladite fonction LVV, lesdits premier et deuxièmes seuils permettant d'exclure un écart prédéfini entre deux consignes successives données par un conducteur par l'intermédiaire d'une interface homme machine.

Ainsi, on évite des accélérations ou décélérations intempestives dudit véhicule et/ou des alertes intempestives dans ledit véhicule lors d'échanges entre un premier calculateur dit calculateur LVV, et un second calculateur dit superviseur. De manière simple et efficace dans un système complexe, on détecte une variation anormale de la consigne de vitesse limite. On détecte donc une anomalie provenant du calculateur LVV (par exemple, une surcharge de calcul, un dysfonctionnement d'un algorithme, une incapacité de traitement par l'interface de sortie, ...), une anomalie provenant des connectiques et/ou de l'interface filaire (faux contacts, court-circuit, circuit ouvert, perturbation électromagnétique, collision de trames CAN, anomalie sur la messagerie CAN transmise, ...) et/ou une anomalie provenant du superviseur (par exemple, une surcharge de calcul, un dysfonctionnement d'un algorithme, un fonctionnement non attendu, une incapacité de traitement par l'interface d'entrée, ...).

Le véhicule est mis en sécurité par la désactivation de la fonction limitateur de vitesse. Le conducteur reprend la main sur l'accélération du véhicule, il n'y a plus de limitation de vitesse. Cela est très utile lors d'un dépassement d'un autre véhicule et de ne pas se voir limiter par une vitesse inférieure à celle que le conducteur souhaite. Il n'y a plus d'accélération ou plus de décélération intempestives lors d'une anomalie engendrant un écart positif et lorsque la pédale d'accélération est enfoncée au-delà de l'accélération nécessaire pour maintenir la vitesse véhicule selon l'ancienne consigne.

Également, l'alerte de survitesse, un signal sonore et/ou visuel répétés continuellement tant que la vitesse du véhicule est supérieure à la vitesse limite, est ainsi désactivée évitant ainsi un bruit incessant et stressant si la nouvelle consigne (par exemple 0 km/h compris par le superviseur à la suite d'une anomalie sur la messagerie CAN) est inférieure par rapport à l'ancienne consigne (par exemple 80 km/h).

Avantageusement, à la suite de la désactivation de ladite fonction LVV, le procédé comporte en outre une étape de réactivation de ladite fonction, permettant ainsi de recevoir de nouveau une information de demande d'activation du limitateur de vitesse véhicule.

Ainsi, en présence d'un défaut fugitif rare, la fonction limiteur de vitesse véhicule peut être réutilisé au cours d'un même roulage.

Avantageusement, le procédé comporte une étape préliminaire d'initialisation à zéro d'un compteur de désactivation de ladite fonction LVV, et le procédé comporte en outre les étapes :
- d'incrémentation du compteur de désactivation de ladite fonction LVV, après chaque désactivation de ladite fonction LVV ;
- d'inhibition de ladite fonction LVV, lorsque le compteur de désactivation est supérieur à seuil prédéfini, l'inhibition ne permettant plus la réactivation de ladite fonction LVV.

Avantageusement, lors de la création dudit signal de désactivation, le procédé comporte en outre une étape d'enregistrement d'un code défaut dans le superviseur, dans le calculateur LVV et/ou dans un autre calculateur, le code défaut étant une signature numérique identifiant que ledit écart est supérieur au seuil haut ou est inférieur au seuil bas.

Avantageusement, le procédé comporte en outre les étapes :
- d'acquisition de données d'un contexte véhicule au moment où on détermine que ledit écart est supérieur au seuil haut ou est inférieur au seuil bas ;
- de détermination de données de sauvegarde, les données de sauvegarde pouvant comprendre ledit compteur, une combinaison ou un traitement des données du contexte véhicule ;
- de sauvegarde des données de sauvegarde dans le superviseur, le calculateur LVV et/ou un autre calculateur dudit véhicule.

Ainsi, une anomalie ayant été détectée, la lecture, par un outil d'après-vente et/ou de développement, du code défaut et des données de sauvegarde vont permettre d'identifier de manière plus sûre et plus rapidement la source de l'anomalie.

Avantageusement, le seuil haut est un nombre compris entre 1 et 10 unités, et le seuil bas est un nombre compris entre -1 et -10 unités, une unité représentant des km/h, des miles/h ou autre unité de vitesse.

Un deuxième aspect de l'invention concerne un dispositif comprenant une mémoire associée à au moins un processeur configuré pour mettre en œuvre le procédé selon le premier aspect de l'invention.

L'invention concerne aussi un véhicule comportant le dispositif.

L'invention concerne aussi un programme d'ordinateur comprenant des instructions qui, lorsque le programme est exécuté par le dispositif selon le deuxième aspect de l'invention, conduisent celui-ci à mettre en œuvre le procédé selon le premier aspect de l'invention.

### Brève description des figures

D'autres caractéristiques et avantages de l'invention ressortiront de la description des modes de réalisation non limitatifs de l'invention ci-après, en référence aux figures annexées, sur lesquelles :
[Fig. 1] illustre schématiquement un dispositif, selon un exemple particulier de réalisation de la présente invention.
[Fig. 2] illustre schématiquement un procédé de désactivation d'une fonction limitateur de vitesse véhicule d'un véhicule autonome, selon un exemple particulier de réalisation de la présente invention.

### Description détaillée de l'invention

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

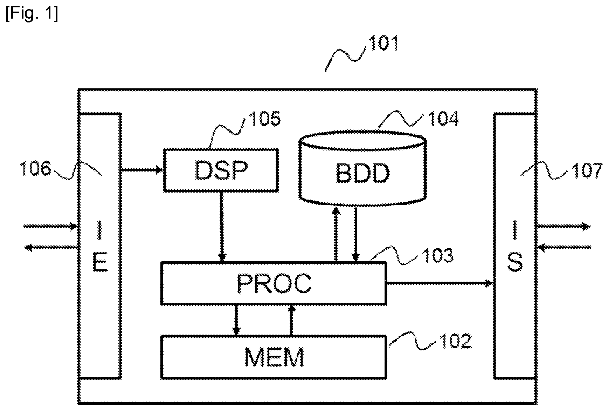

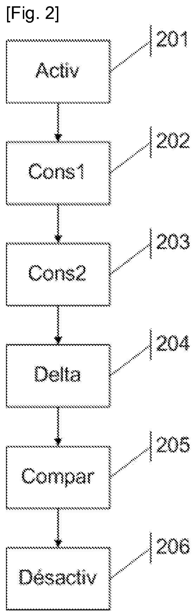

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome. Un calculateur de supervision appartenant au Groupe moto propulseur ou à la Chaîne de Traction peut être représenté par un même dispositif 101.

Dans la présente invention, au moins deux dispositifs 101 sont compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en œuvre par un processeur 103 d'au moins une étape du procédé tel que décrit ci-avant. Le dispositif comporte aussi une mémoire de masse 104 pour le stockage de données destinées à être conservées après la mise en œuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en œuvre par le procédé selon l'invention et une interface de sortie 107 pour la transmission des données mises en œuvre par le procédé selon l'invention.

Par exemple, l'interface d'entrée 106 peut réceptionner les données suivantes : position ou localisation géographique du véhicule, vitesse et/ou accélération du véhicule, positions/vitesses/accélérations consignes ou prédéterminées, régime moteur, position et/ou course de la pédale d'embrayage, de frein et/ou d'accélération, détection d'autres véhicules ou objets, position ou localisation géographique des autres véhicules ou objets détectés, vitesse et/ou accélération des autres véhicules ou objets détectés, états de fonctionnement de capteurs, indice de confiance de données issues ou traitées par des capteurs et/ou dispositifs similaires au dispositif 101, de donnés issues de dispositifs similaires au dispositif 101 et/ou de dispositifs de type Interface Homme Machine (bouton, touche, molette, joystick, zone ou position d'un écran tactile, son, ....) . Par exemple, les capteurs aptes à fournir des données sont : GPS associé ou non à une cartographie, tachymètres, accéléromètres, RADAR, LIDAR, lasers, ultra-sons, caméra ...

Par exemple, l'interface de sortie 107 peut émettre des données vers d'autres dispositifs similaires au dispositif 101. Ces données peuvent être une demande d'activation, une mise en pause ou un arrêt d'une fonction, une valeur d'une vitesse limite consigne, ...

La figure 2 illustre schématiquement un procédé de désactivation d'une fonction limitateur de vitesse véhicule d'un véhicule autonome, selon un exemple particulier de réalisation de la présente invention. Ledit véhicule comprend un premier calculateur, dit calculateur LVV, communiquant avec un second calculateur, dit superviseur.

L'étape 201, Activ, est une étape de réception par ledit superviseur d'une information de demande d'activation de ladite fonction LVV, dite information d'activation, ladite information d'activation étant transmise par ledit calculateur LVV.

Une interface homme machine, IHM, est disponible à proximité d'un conducteur du véhicule. A l'aide de cette IHM, le conducteur peut activer, mettre en pose ou arrêter la fonction LVV. Le conducteur peut également régler la vitesse limite consigne. Par appuis courts, moins d'un temps prédéterminé, successifs sur une touche « + » ou « - » par exemple, la valeur de la vitesse limite consigne est modifié par pas de +/- 1 unité (km/h, miles/h, ...). Par un appui continu, appui supérieur à un autre temps prédéterminé, sur une touche « + » ou « - » par exemple, la valeur de la vitesse limite consigne est modifié par pas de +/- 5 unités (km/h, miles/h, ...) par exemple.

Une interprétation des données de l'IHM est réalisée par le calculateur LVV qui transmet ensuite une activation/pause/arrêt et une vitesse limite consigne au superviseur. Le superviseur appartenant au Groupe Moto Propulseur gère alors l'accélération que doit avoir le véhicule pour respecter la vitesse limite consigne en modifiant les consignes d'accélération données en fonction de l'enfoncement d'une pédale d'accélération.

A réception de l'information d'activation, le superviseur va alors gérer (augmenter/diminuer selon différents profils - plus ou moins vite) le besoin en accélération en fonction d'une vitesse limite consigne.

En principe, le calculateur LVV envoie juste après l'information d'activation une vitesse limite consigne. Cette vitesse limite consigne peut être une valeur, enregistrée en mémoire 102 du dispositif lié au superviseur. Cette valeur peut être égale à la dernière valeur de la vitesse limite consigne à la suite d'une mise en pause ou d'arrêt de la fonction LVV.

L'étape 202, Cons1, est une étape réception par ledit superviseur d'une première information de vitesse limite consigne, dite ancienne consigne, ladite ancienne consigne étant transmise par ledit calculateur LVV.

Lorsque le conducteur active la fonction LVV, le calculateur LVV envoie au superviseur une information de vitesse limite consigne. A chaque modification de la vitesse limite consigne par le conducteur à l'aide d'une IHM, le calculateur LVV envoie au superviseur une information de vitesse limite consigne. Par exemple, jusqu'à 5 modifications de la vitesse limite consigne sont envoyés par seconde.

L'étape 203, Cons2, est une étape de réception par ledit superviseur d'une deuxième information de vitesse limite consigne, dite nouvelle consigne, ladite nouvelle consigne étant transmise par ledit calculateur LVV, la nouvelle consigne étant transmise après la transmission de l'ancienne consigne.

L'étape 204, Delta, est une étape détermination d'un écart entre ladite nouvelle consigne et ladite ancienne consigne. Très simplement, cet écart est la différence entre la nouvelle consigne et l'ancienne consigne.

L'étape 205, Compa, est une étape de comparaison. On compare si ledit écart est supérieur à un premier seuil prédéfini, dit seuil haut, ou si ledit écart est inférieur à un deuxième seuil prédéfini, dit seuil bas, ledit seuil haut étant positif, ledit seuil bas étant négatif.

Avantageusement, le seuil haut est un nombre compris entre 1 et 10 unités, et le seuil bas est un nombre compris entre -1 et -10 unités, une unité représentant des km/h ou des miles/h. D'autres valeurs sont possibles en fonction de comment l'information vitesse limite est codée/décodée. Dans un mode opératoire, le seuil haut est égale à 5 km/h, et le seuil bas est égale à -5 km/h.

Avantageusement, le seuil haut et le seuil sont choisis tels que s'il y un écart, cet écart reste dans la limite de variations possibles de ce que peut faire un conducteur en programmant une vitesse limite. Lesdits premier et deuxièmes seuils permettent d'exclure un écart prédéfini entre deux consignes successives données par un conducteur par l'intermédiaire d'une interface homme machine. Classiquement, l'écart entre deux consignes successivement du conducteur par l'intermédiaire d'une interface homme -machine est de 1 unité.

Il peut utile d'avoir un seuil haut différent de l'opposé du seuil bas. En effet, les anomalies constatées peuvent être présente pendant un temps très cours, quelques pas de temps, voir un seul pas de temps (au cours d'un seul message transmis via le réseau CAN par exemple). Avoir un seuil haut plus grand que l'opposée du seuil bas (seuil haut > -seuil bas) tolère plus des erreurs de fourniture d'une vitesse limite consigne plus élevée que celle programmée par le conducteur. Avoir un écart plus grand, en valeur absolue, en positif, est moins dérangeant qu'un écart en négatif. Une suraccélération ou une sur décélération ne sont pas instantanées en comparaison d'une alerte sonore à la suite à un franchissement de la vitesse limite à cause d'une vitesse limite consigne transmise erronée et plus basse que celle de la vitesse limite programmée.

Dans le cas où ledit écart est supérieur au premier ou ledit écart est inférieure au second seuil, nous détectons une variation de la transmission de la vitesse limite consigne non compatible avec la programmation de la vitesse limite par le conducteur. Nous passons alors dans l'étape 206. Sinon, nous renouvelons les étapes précédentes (202 à 205) et surveillons les informations transmises par le calculateur LVV.

L'étape 206, Désactiv, est une étape de création, par le superviseur, d'un signal de désactivation de ladite fonction LVV, le signal de désactivation étant utilisé par un calculateur dudit véhicule pour désactiver ladite fonction LVV.

En arrivant dans cette étape, nous avons donc détecté une anomalie, la variation de l'information vitesse limite consigne est trop grande par rapport à ce peut programmer le conducteur par un appui sur les touches « + » et « - ». Ayant une anomalie, nous créons un signal qui sera transmis, en interne du superviseur, au calculateur LVV et/ou à un autre calculateur, pour désactiver la fonction LVV. Dans un mode opératoire, le conducteur en est informé.

Avantageusement, à la suite de la désactivation de ladite fonction LVV, le procédé comporte en outre une étape de réactivation de ladite fonction, permettant ainsi de recevoir de nouveau une information de demande d'activation du limitateur de vitesse véhicule. En effet, l'anomalie n'est que temporairement parce que momentanément, par exemple, le réseau CAN a été saturé, un message CAN prioritaire a transité, il y a eu une perturbation électromagnétique, ...

Avantageusement, le procédé comporte une étape préliminaire d'initialisation à zéro d'un compteur de désactivation de ladite fonction LVV, et le procédé comporte en outre les étapes :
- d'incrémentation du compteur de désactivation de ladite fonction LVV, après chaque désactivation de ladite fonction LVV,
- d'inhibition de ladite fonction LVV, lorsque le compteur de désactivation est supérieur à un seuil prédéfini, l'inhibition ne permettant plus la réactivation de ladite fonction LVV. Le seuil prédéfini est un entier positif, il peut être égale à 2, 3, 5 ou plus. De manière préférentielle le seuil prédéfini est égal à 3.

Parfois, l'anomalie n'est pas temporaire à cause, par exemple d'une connectique défectueuse, d'un bug logiciel, ... Il ne sert à rien de permettre d'activer à nouveau la fonction LVV. Le compteur permet compter le nombre d'anomalies détectées, par exemple au cours d'un même roulage. Dans un mode opératoire, le compteur est remis à zéro au démarrage du véhicule.

S'il le nombre d'anomalies détectées est trop important, donc au-dessus du seuil prédéfini, la fonction LVV est inhibée. On ne permet plus au cours du même roulage de réactiver la fonction LVV. Si le superviseur reçoit à nouveau une information d'activation celui n'est pas pris en compte. Avantageusement, le conducteur est prévu vie l'IHM.

Avantageusement, lors de la création dudit signal de désactivation, le procédé comporte en outre une étape d'enregistrement d'un code défaut dans le superviseur, dans le calculateur LVV et/ou dans un autre calculateur, le code défaut étant une signature numérique identifiant que ledit écart est supérieur au seuil haut ou est inférieur au seuil bas.

Ayant identifié une anomalie sur le véhicule par le superviseur, le problème rencontré est enregistré dans une mémoire 102 selon une signature numérique particulière. Cette signature peut être un code alpha numérique prédéfini. En après-vente ou via un outil de développement, la lecture de ce code permet d'identifier qu'une anomalie a été détectée et quel type d'anomalie a été détectée.

Avantageusement, le procédé comporte en outre les étapes :
- d'acquisition de données d'un contexte véhicule au moment où on détermine que ledit écart est supérieur au seuil haut ou inférieur au seuil bas ;
- de détermination de données de sauvegarde, les données de sauvegarde pouvant comprendre ledit compteur, une combinaison ou un traitement des données du contexte véhicule ;
- de sauvegarde des données de sauvegarde dans le superviseur, le calculateur LVV et/ou un autre calculateur dudit véhicule.
En plus du type d'anomalie/problème rencontré, dans un mode opératoire, on enregistre des informations du contexte dans lequel l'anomalie a été détectée. Par exemple, ces informations du contexte sont la date, l'heure ou le pas de temps d'un ou plusieurs calculateurs, le kilométrage, la vitesse limite consigne envoyée par le calculateur LVV, la vitesse limite consigne reçue par le superviseur, ledit compteur,

## Revendications

1. Procédé de désactivation d'une fonction limitateur de vitesse véhicule, dite fonction LVV, d'un véhicule autonome, ledit véhicule comprenant un premier calculateur, dit calculateur LVV, communiquant avec un second calculateur, dit superviseur, ledit procédé comportant les étapes de :
- réception (201) par ledit superviseur d'une information de demande d'activation de ladite fonction LVV, dite information d'activation, ladite information d'activation étant transmise par ledit calculateur LVV ;
- réception (202) par ledit superviseur d'une première information de vitesse limite consigne, dite ancienne consigne, ladite ancienne consigne étant transmise par ledit calculateur LVV ;
- réception (203) par ledit superviseur d'une deuxième information de vitesse limite consigne, dite nouvelle consigne, ladite nouvelle consigne étant transmise par ledit calculateur LVV, la nouvelle consigne étant transmise après la transmission de l'ancienne consigne ;
- détermination (204) d'un écart entre ladite nouvelle consigne et ladite ancienne consigne ;
- si (205) ledit écart est supérieur à un premier seuil prédéfini, dit seuil haut, ou si ledit écart est inférieur à un deuxième seuil prédéfini, dit seuil bas, ledit seuil haut étant positif, ledit seuil bas étant négatif, création (206), par le superviseur, d'un signal de désactivation de ladite fonction LVV, le signal de désactivation étant utilisé par un calculateur dudit véhicule pour désactiver ladite fonction LVV, lesdits premier et deuxièmes seuils permettant d'exclure un écart prédéfini entre deux consignes successives données par un conducteur par l'intermédiaire d'une interface homme machine.

2. Procédé selon la revendication 1, dans lequel à la suite de la désactivation de ladite fonction LVV, le procédé comporte en outre une étape de réactivation de ladite fonction, permettant ainsi de recevoir de nouveau une information de demande d'activation du limitateur de vitesse véhicule.

3. Procédé selon la revendication 2, dans lequel le procédé comporte une étape préliminaire d'initialisation à zéro d'un compteur de désactivation de ladite fonction LVV, et le procédé comporte en outre les étapes :
- d'incrémentation du compteur de désactivation de ladite fonction LVV, après chaque désactivation de ladite fonction LVV,
- d'inhibition de ladite fonction LVV, lorsque le compteur de désactivation est supérieur à seuil prédéfini, l'inhibition ne permettant plus la réactivation de ladite fonction LVV.

4. Procédé selon l'une des revendications précédentes, dans lequel lors de la création dudit signal de désactivation, le procédé comporte en outre une étape d'enregistrement d'un code défaut dans le superviseur, dans le calculateur LVV et/ou dans un autre calculateur, le code défaut étant une signature numérique identifiant que ledit écart est supérieur au seuil haut ou est inférieur au seuil bas.

5. Procédé selon les revendications 1 à 4, dans lequel le procédé comporte en outre les étapes :
- d'acquisition de données d'un contexte véhicule au moment où on détermine que ledit écart est supérieur au seuil haut ou inférieur au seuil bas ;
- de détermination de données de sauvegarde, les données de sauvegarde pouvant comprendre ledit compteur, une combinaison ou un traitement des données du contexte véhicule ;
- de sauvegarde des données de sauvegarde dans le superviseur, le calculateur LVV et/ou un autre calculateur dudit véhicule.

6. Procédé selon l'une des revendications précédentes, dans lequel le seuil haut est un nombre compris entre 1 et 10 unités, et le seuil bas est un nombre compris entre -1 et -10 unités, une unité représentant des km/h ou des miles/h.

7. Dispositif (101) comprenant une mémoire (102) associée à au moins un processeur (103) configuré pour mettre en œuvre le procédé selon l'une des revendications précédentes.

8. Véhicule comportant le dispositif selon la revendication précédente.

## Patentansprüche

1. Verfahren zur Deaktivierung einer Fahrzeuggeschwindigkeitsbegrenzungsfunktion, der so genannten LVV-Funktion, eines autonomen Fahrzeugs, wobei das Fahrzeug einen ersten Rechner, den so genannten LVV-Rechner, umfasst, der mit einem zweiten Rechner, dem so genannten Supervisor, kommuniziert, wobei das Verfahren die folgenden Schritte umfasst:
- Empfangen (201) von der Supervisorin einer Anforderungsinformation zur Aktivierung der LVV-Funktion, der so genannten Aktivierungsinformation, wobei die Aktivierungsinformation durch den LVV-Rechner übertragen wird;
- Empfangen (202) von der Supervisorin einer ersten Soll-Geschwindigkeitsinformation, dem alten Soll, durch den Rechner LVV;
- Empfang (203) einer zweiten Soll-Geschwindigkeitsinformation, des so genannten neuen Sollwerts, durch den genannten LVV-Rechner, wobei der neue Sollwert nach der Übertragung des alten Sollwerts übermittelt wird;
- Bestimmung (204) einer Abweichung zwischen dem neuen Sollwert und dem alten Sollwert;
- wenn (205) die Abweichung größer als ein erster vorgegebener Schwellenwert, der so genannte hohe Schwellenwert, ist oder wenn die Abweichung kleiner als ein zweiter vorgegebener Schwellenwert ist, der so genannte niedrige Schwellenwert, wobei der niedrige Schwellenwert positiv ist, wird erzeugt (206) durch die Überwachungseinrichtung eines Deaktivierungssignals für die LVV-Funktion, wobei das Deaktivierungssignal von einem Rechner des Fahrzeugs zur Deaktivierung der LVV-Funktion verwendet wird, wobei der erste und der zweite Schwellenwert es ermöglichen, eine vorgegebene Abweichung zwischen zwei aufeinander folgenden, von einem Fahrer über eine Mensch-Maschine-Schnittstelle gegebenen Sollwerten auszuschließen.

2. Verfahren nach Anspruch 1, wobei das Verfahren nach der Deaktivierung der LVV-Funktion ferner einen Schritt des Reaktivierens der Funktion umfasst, wodurch ermöglicht wird, dass erneut eine Anforderungsinformation zur Aktivierung des Fahrzeuggeschwindigkeitsbegrenzers empfangen wird.

3. Verfahren nach Anspruch 2, bei dem das Verfahren einen vorläufigen Schritt des Nullstartens eines Zählers zum Deaktivieren der LVV-Funktion umfasst, und das Verfahren ferner die Schritte umfasst:
- Inkrementieren des Zählers zum Deaktivieren der LVV-Funktion nach jeder Deaktivierung der LVV-Funktion,
- Sperren der LVV-Funktion, wenn der Deaktivierungszähler größer als ein vorbestimmter Schwellenwert ist, wobei das Sperren die Reaktivierung der LVV-Funktion nicht mehr erlaubt.

4. Verfahren nach einem der vorhergehenden Ansprüche, bei dem bei der Erzeugung des Deaktivierungssignals das Verfahren ferner einen Schritt des Aufzeichnens eines Fehlercodes in dem Überwachungsgerät, dem LVV-Rechner und/oder in einem anderen Rechner umfasst, wobei der Fehlercode eine digitale Signatur ist, die identifiziert, dass die Abweichung größer als der obere Schwellenwert oder kleiner als der niedrige Schwellenwert ist.

5. Verfahren nach einem der Ansprüche 1 bis 4, wobei das Verfahren ferner die folgenden Schritte umfasst:
- Erfassen von Daten aus einem Fahrzeugkontext zu dem Zeitpunkt, zu dem bestimmt wird, dass die Abweichung größer als der obere Schwellenwert oder kleiner als der untere Schwellenwert ist;
- Bestimmen von Sicherungsdaten, wobei die Sicherungsdaten den Zähler, eine Kombination oder eine Verarbeitung von Daten aus dem Fahrzeugkontext umfassen können;
- Sichern der Sicherungsdaten in dem Überwachungsgerät, dem LVV-Rechner und/oder einem anderen Rechner des Fahrzeugs.

6. Verfahren nach einem der vorhergehenden Ansprüche, wobei der obere Schwellenwert eine Zahl zwischen 1 und 10 Einheiten und der untere Schwellenwert eine Zahl zwischen -1 und -10 Einheiten ist, wobei eine Einheit km/h oder Meilen/h darstellt.

7. Vorrichtung (101) mit einem Speicher (102), der mindestens einem Prozessor (103) zugeordnet ist, der so konfiguriert ist, dass er das Verfahren nach einem der vorhergehenden Ansprüche ausführt.

8. Fahrzeug mit der Vorrichtung nach dem vorhergehenden Anspruch.

## Claims

1. Method for deactivating a vehicle speed limiter function, referred to as the LVV function, of an autonomous vehicle, said vehicle comprising a first computer, referred to as the LVV computer, communicating with a second computer, referred to as the supervisor, said method comprising the steps of:
- receipt (201) by said supervisor of activation demand information of said LVV function, referred to as the activation information, said activation information being transmitted by said LVV computer;
- receipt (202) by said supervisor of a first setpoint speed information, referred to as the former setpoint speed information, said former setpoint speed information being transmitted by said LVV computer;
- receipt (203) by said supervisor of a second setpoint speed information, referred to as the new setpoint speed information being transmitted by said LVV computer, the former setpoint speed control
transmission; determination (204) of a variance between said new setpoint and said old setpoint;
- if (205) said variance is greater than a first predefined threshold, called high threshold, or if said variance is less than a second predefined threshold, called low threshold, said high threshold being positive, said low threshold being negative, creation (206), by the supervisor, of a signal for deactivating said LVV function, the deactivation signal being used by a computer of said vehicle to deactivate said LVV function, said first and second thresholds making it possible to exclude a predefined variance between two successive setpoints given by a driver via a man-machine interface.

2. Method as claimed in claim 1, wherein, following the deactivation of said LVV function, the method further comprises a step of reactivation of said function, thus making it possible to receive again activation demand information from the vehicle speed limiter.

3. Method as claimed in claim 2, wherein the method comprises a preliminary step of initialising to zero a counter for deactivating said LVV function, and the method further comprises the steps:
- of incrementing the counter for deactivating said LVV function, after each deactivation of said LVV function,
- of inhibiting said LVV function, when the deactivation counter is greater than a predefined threshold, the inhibition no longer allowing the reactivation of said LVV function.

4. Method as claimed in claim 1, wherein, during the creation of said deactivation signal, the method further comprises a step of recording a defect code in the supervisor, in the LVV computer and/or in another computer, the defect code being a numerical signature identification that said variance is higher than the high threshold or is lower than the low threshold.

5. Method according to claims 1 to 4, wherein the method further comprises the steps of:
- acquiring data from a vehicle environment at the moment when it is determined that said variance is greater than the high threshold or less than the low threshold;
- determining backup data, the backup data possibly comprising said counter, a combination or a processing of the data from the vehicle environment;
- saving the backup data in the supervisor, the LVV computer and/or another computer of said vehicle.

6. Method according to claim 1, wherein the high threshold is a quantity between 1 and 10 units, and the low threshold is a quantity between -1 and -10 units, a unit representing km/h or miles/h.

7. Device (101) comprising a memory (102) associated with at least one processor (103) configured to implement the method according to one of the previous claims.

8. ehicle comprising the device according to the previous claim.
